# FASCICULE DE BREVET EUROPEEN

(11) **EP 0 658 520 B1**
(45) Date de publication et mention de la délivrance du brevet: **08.09.1999**
(21) Numéro de dépôt: 94402854.7
(22) Date de dépôt: 12.12.1994
(51) Int. Cl.: C03B 37/012, C03B 37/014, C03C 13/04

(54) **Procédé de recharge par plasma d'une préforme pour fibre optique et fibre optique issue de la préforme rechargée selon ce procédé**
Verfahren zur Änderung der elektrischen Ladung einer Vorform für optische Fasern mittels Plasma und optische Faser, hergestellt aus einer Vorform mit veränderter Ladung nach diesem Verfahren
Process of plasma recharging a preform for optical fibre and optical fibre made from recharged preform produced by this method

(30) Priorité: 14.12.1993 FR 9315016
(43) Date de publication de la demande: 21.06.1995
(73) Titulaire: ALCATEL, 75008 Paris (FR)
(72) Inventeur: Drouart, Alain, F-92000 Nanterre (FR); Gouez, Benoit, F-75002 Paris (FR); Jouvenel, Bernard, F-91440 Bures Sur Yvette (FR); Lumineau, Yves, F-95610 Eragny Sur Oise (FR); Matau, Max, F-92390 Villeneuve la Garenne (FR); Ripoche, Pierre, F-45300 Pithiviers (FR)
(74) Mandataire: Buffière, Michelle

(56) Documents cités:
- EP-A- 0 173 183
- EP-A- 0 401 742
- EP-A- 0 401 845
- EP-A- 0 477 435
- FR-A- 2 253 723
- GB-A- 2 186 992
- US-A- 4 114 980
- PATENT ABSTRACTS OF JAPAN vol. 5 no. 114 (C-64) ,23 Juillet 1981 & JP-A-56 054239 (NT&T CORP) 14 Mai 1981,
- DATABASE WPI Week 8634 Derwent Publications Ltd., London, GB; AN 86-221207 & JP-A-61 151 031 (HITACHI CABLE KK) , 9 Juillet 1986
- DATABASE WPI Week 9028 Derwent Publications Ltd., London, GB; AN 90-212437 & JP-A-02 141 437 (SUMITOMO ELECTRIC IND KK) , 30 Mai 1990
- PATENT ABSTRACTS OF JAPAN vol. 7 no. 232 (C-190) ,14 Octobre 1983 & JP-A-58 125628 (FURUKAWA DENKI KOGYO KK) 26 Juillet 1983,
- JOURNAL OF LIGHTWAVE TECHNOLOGY, vol. 8,no. 10, Octobre 1990 NEW YORK US, M. BREDOL ET AL

## Description

La présente invention concerne la réalisation de fibres optiques issues de préformes rechargées de silice pure ou éventuellement dopée. Elle porte plus particulièrement sur un procédé de recharge par plasma d'une préforme pour fibre optique et sur une fibre optique issue de la préforme rechargée selon ce procédé.

La technique de recharge par plasma d'une préforme, dite préforme primaire, est relativement récente. Elle est notamment utilisée pour la réalisation de fibres optiques monomodes. Elle permet l'obtention d'une préforme dont le diamètre final après recharge est plus important, ce qui permet l'étirage de longueurs nettement plus importantes de fibre optique à partir de la préforme rechargée.

La technique antérieure de recharge d'une préforme primaire, la plus couramment utilisée, est celle dite de manchonnage. Elle consiste à rapporter sur la préforme primaire un tube choisi de nature aussi proche que possible de celle de la couche externe de la préforme primaire et à rétreindre ce tube de manchonnage sur la préforme primaire. Elle permet l'obtention d'une préforme finale, après rétreinte du tube de silice de manchonnage, de diamètre de l'ordre de 40mm, et de fibres optiques en particulier monomodes, après étirage de la préforme ainsi rechargée, dont les atténuations aux longueurs d'ondes utiles de transmission sont acceptables. Elle a par contre l'inconvénient principal de nécessiter une opération finale de rétreinte du tube de manchonnage sur la préforme primaire. Elle est en outre limitée par le faible choix de tubes de manchonnage disponibles dans le commerce, qui sont essentiellement en silice dite pure ou en silice dopée au fluor. Pour des raisons de compatibilité entre la nature de la couche externe de la préforme primaire et celle du tube de manchonnage, cette technique est le plus souvent appliquée à des préformes primaires MCVD, dont la gaine optique et le coeur optique sont réalisés dans un tube de silice pure du commerce, en utilisant un tube de manchonnage également en silice pure du commerce.

La technique de recharge par plasma de silice pure ou dopée a comparativement l'avantage de réaliser directement la vitrification de la silice de recharge sur la préforme primaire. Elle a aussi l'avantage de pouvoir être mise en oeuvre sur une préforme réalisée par l'un des différents procédés connus, tels que ceux désignés sous les sigles anglo-saxons VAD (Vapor Axial Deposition), OVD (Outside Vapor Deposition), MCVD (Modified Chemical Vapor Deposition) notamment. Elle permet donc comme la technique de manchonnage de compléter en épaisseur la couche externe de la préforme primaire, le matériau de recharge par plasma étant alors également aussi proche que possible de celui de la couche externe de la préforme primaire. Elle permet aussi, avantageusement par rapport à la technique de manchonnage, de réaliser la totalité de la gaine externe de la préforme finale issue de recharge, en partant d'une préforme primaire ne comportant initialement que le coeur optique et la gaine optique ou d'une préforme primaire, notamment MCVD, comportant un tube initial, dans lequel sont réalisés les dépôts internes de la gaine optique et du coeur et qui est éliminé après rétreinte de la préforme primaire et avant la recharge. Lors de la réalisation de la totalité de la gaine externe, le matériau de recharge est choisi pour présenter un indice de réfraction différencié convenablement par rapport à celui de la gaine optique qu'il recouvre.

Cette technique de dépôt externe de silice par plasma est mise en oeuvre jusqu'à présent en réduisant au maximum la présence d'ions hydroxyles dans la silice déposée.

Ainsi le document FR-A-2253723 décrit un procédé de préparation d'une préforme consistant notamment à réaliser un dépôt externe de silice sur un tube ou un barreau, à partir d'une poudre fine et desséchée de silice pure, alimentant la flamme d'un chalumeau à plasma, et à l'aide d'un gaz plasmagène, de préférence de l'argon, et à protéger de toute pollution, et tout particulièrement des ions OH, la silice déposée, en introduisant la préforme munie de son dépôt de silice dans une enceinte étuvée dans laquelle on a fait un vide poussé.

La demanderesse s'est aperçue qu'une telle recharge par plasma d'épaisseur relativement importante conduit à une préforme finale et donc à des fibres issues de cette préforme finale ayant de fortes atténuations. Ces atténuations augmentent en fonction du diamètre final de la préforme rechargée et deviennent rapidement excessives, ce qui a limité sérieusement l'utilisation de cette technique jusqu'à présent.

La présente invention a pour but de recharger par plasma des préformes primaires, pour l'obtention de préformes rechargées pouvant avoir un diamètre final important et de fibres issues de ces préformes rechargées présentant des atténuations réduites et tout à fait satisfaisantes, cette recharge par plasma pouvant en outre de préférence être réalisée à partir de grains de silice pure ou dopée pour bénéficier avantageusement alors du bon rendement du dépôt obtenu et du coût comparativement peu élevé de cette recharge.

Elle a pour objet un procédé de recharge par plasma d'une préforme pour fibre optique, consistant à déposer de la silice dite de recharge sur la préforme à recharger dite préforme primaire, à l'aide d'une torche à plasma, caractérisé en ce qu'il consiste en outre à introduire de façon contrôlée des ions hydroxyles dans ladite silice de recharge, pour l'obtention d'une teneur moyenne en ions hydroxyles comprise entre 50 et 100 ppm dans la silice de recharge déposée sur ladite préforme primaire.

Ce procédé présente avantageusement en outre au moins l'une des caractéristiques additionnelles suivantes:
- l'introduction contrôlée desdits ions hydroxyles dans la silice de recharge est faite sensiblement au niveau de la torche à plasma, au fur et à mesure de la recharge, de préférence à l'aide d'un gaz plasmagène, ce gaz étant en particulier humidifié ou véhiculant les atomes ou éléments nécessaires à la formation des ions hydroxyles dans la torche à plasma.
- L'introduction contrôlée des ions hydroxyles dans la silice de recharge est faite avant la recharge et éventuellement pendant la recharge quand la recharge est réalisée à partir de grains de silice naturelle ou synthétique ou après la recharge quand la silice de recharge est déposée sous forme de suie,
- l'introduction d'ions hydroxyles dans la silice de recharge est faite à niveau contrôlé et constant ou progressif.

L'invention a également pour objet une fibre optique issue d'une préforme primaire rechargée de silice selon le procédé ci-dessus, comportant un coeur optique, une gaine optique et au moins un revêtement de silice dont le plus externe et dit revêtement externe résulte de la recharge par plasma de ladite préforme primaire, caractérisée en ce que ledit revêtement externe de silice a une teneur moyenne d'ions hydroxyles comprise entre 50 p.p.m et 150 p.p.m.

En particulier, ledit revêtement externe de silice a une teneur d'ions hydroxyles variable progressivement et comporte une première couche, la plus intérieure, ayant une teneur en ions hydroxyles inférieure à 50 p.p.m et une deuxième couche, sur la première, ayant une épaisseur supérieure à la première et une teneur d'ions hydroxyles comprise entre 50 et 250 p.p.m.

Le revêtement externe comporte une troisième couche la plus externe, ayant une teneur d'ions hydroxyles inférieure à 50 p.p.m.

Les caractéristiques et avantages de la présente invention ressortiront de la description faite ci-après en regard des dessins ci-annexés. Dans ces dessins:
- La figure 1 est une vue schématique en coupe d'une préforme rechargée selon l'invention, ou d'une fibre optique issue de cette préforme rechargée,
- La figure 2 illustre un mode préféré de recharge par plasma selon l'invention,
- La figure 3 représente des courbes comparatives d'atténuation d'une fibre optique issue d'une préforme rechargée par plasma selon l'invention et d'une fibre optique issue d'une préforme rechargée par plasma selon la technique antérieure.

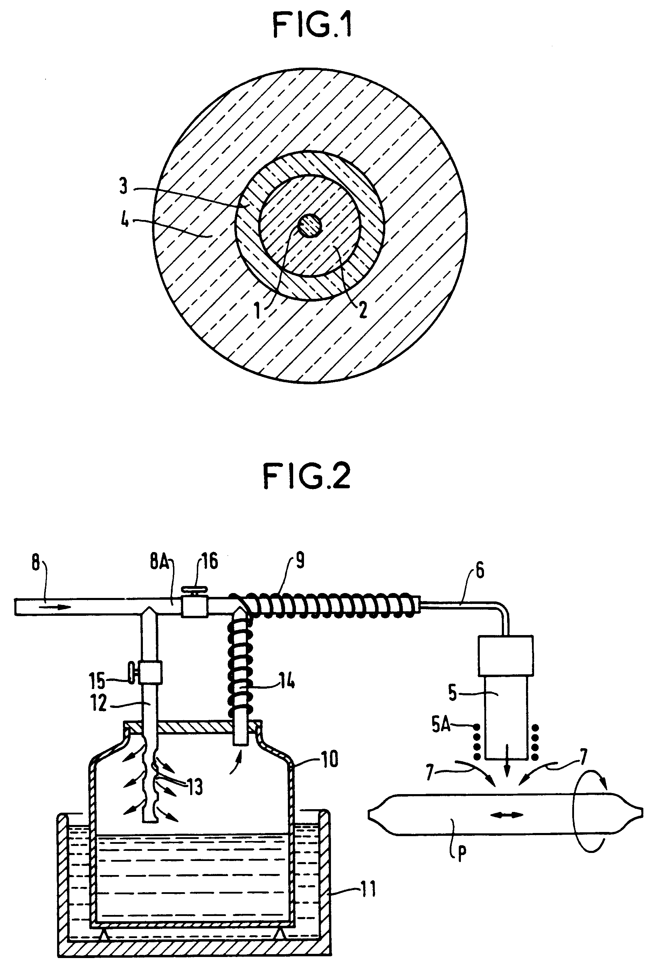

En se référant à la figure 1, on voit que la préforme rechargée selon l'invention ou la fibre optique issue cette préforme comporte un coeur optique 1, une gaine optique 2 et un revêtement optique formé de deux couches de silice pure 3 et 4 superposées l'une sur l'autre. Cette préforme résulte de la recharge par plasma, réalisée selon l'invention, pour le dépôt de la couche 4 la plus externe sur la couche 3, cette dernière appartenant en particulier à une préforme primaire MCVD et constituant le tube en silice dite pure du commerce dans lequel sont déposées les couches internes formant la gaine optique 2 et le coeur 1.

Le coeur 1 et la gaine optique 2 sont en silice dopée convenablement. Ils présentent l'un par rapport à l'autre et relativement au revêtement constitué par les deux couches 3 et 4 de silice des indices de réfraction différenciés, ainsi qu'il est bien connu pour la réalisation de préforme de fibre optique.

Bien entendu, le revêtement optique illustré formé des deux couches de silice pure 3 et 4 peut consister en une seule couche de recharge, d'épaisseur correspondant à celle globale des deux couches 3 et 4, lorsque la préforme primaire ne comporte pas de couche 3 et est obtenue par un procédé connu autre que le procédé MCVD ou lorsque cette couche 3 a été éliminée avant la recharge.

La couche finale 4 du revêtement optique, ou sa couche unique, obtenue par recharge par plasma de la préforme primaire, est réalisée en introduisant volontairement et de façon contrôlée des ions hydroxyles dans la silice de recharge déposée, ceci contrairement à l'enseignement préconisé jusqu'à présent.

Cette particularité d'une telle recharge par plasma avec introduction contrôlée d'ions hydroxyles dans la silice de recharge est mise en évidence dans le mode de recharge illustré dans la figure 2 et est précisée ci-après.

Dans cette figure 2, on a simplement illustré une torche à plasma 5 et la bobine d'induction 5A qui lui est associée de manière connue, sans le générateur d'énergie électrique relié à cette bobine. On a en outre représenté une conduite 6 débouchant dans le fond de la torche et servant à l'amenée d'un gaz plasmagène dans la torche, et schématisé par des flèches 7 l'injection de grains de silice naturelle ou synthétique dans la flamme de la torche pour la recharge de la préforme primaire P à partir de ces grains. La conduite 6 est elle-même reliée à une conduite 8 d'alimentation en gaz plasmagène. Cette dernière est entourée d'un cordon de chauffage 9, qui est enroulé au moins autour de sa portion terminale reliée à la conduite 6. Cette conduite d'alimentation 8 est en outre avantageusement de diamètre interne légèrement supérieur à celui de la conduite 6. Ces dispositions d'une installation de dépôt externe par plasma de silice sur une ébauche ou autre et notamment sur une préforme primaire sont en tant que telles connues et ne sont de ce fait que partiellement représentées. Elles permettent de délivrer les grains de silice dans la flamme et de projeter la silice fondue sur la préforme primaire montée rotative et mobile en translation devant la flamme, la silice déposée latéralement sur la préforme primaire se vitrifiant directement sur celle-ci.

Une telle installation en tant que telle connue est adaptée pour l'introduction contrôlée des ions hydroxyles dans la silice de recharge. Elle utilise dans l'exemple illustré le gaz plasmagène pour l'amenée contrôlée des ions hydroxyles dans la torche à plasma, au fur et à mesure de la recharge. Elle comporté à cet effet un réservoir 10, contenant de l'eau partiellement vaporisée, qui est monté dans une cuve 11 contenant un bain thermostaté maintenant une surpression de vapeur d'eau dans la partie supérieure du réservoir 10.

Ce réservoir 10 est relié à la conduite d'alimentation 8 par une conduite d'entrée 12, dont la partie terminale intérieure au réservoir 10 est relativement longue et est percée d'orifices périphériques multiples 13, par lesquels le gaz plasmagène est reçu dans la partie supérieure du réservoir. 11 est également relié à la conduite d'alimentation 8, en aval de la condutie d'entrée 12, par une conduite 14 de sortie de gaz plasmagène alors humidifié. La conduite d'entrée 12 est équipée d'une vanne commandée 15, régulant le débit de gaz plasmagène entrant dans le réservoir 10 pour son humidification. La conduite d'alimentation 8 est équipée d'une autre vanne commandée 16, montée sur sa portion 8A située entre les conduites 12 et 14, permettant la coupure de gaz plasmagène non humidifié ou régulant son passage et son mélange au gaz plasmagène humidifié en provenance de la conduite 14. La conduite 14 est quant à elle équipée d'un cordon chauffant, qui est le cordon précité 9 également enroulé autour de cette conduite 14.

Les différentes commandes des vannes 15 et 16 et la régulation du bain thermostaté de la cuve 11 ne sont pas représentées. Elles sont en pratique réalisées par une unité centrale de commande automatique. Elles assurent une régulation de vapeur d'eau entraînée par le gaz plasmagène reçu dans la torche à plasma, la quantité d'eau entraînée pouvant être de 200g/h pour l'obtention en moyenne de 100 p.p.m environ d'ions hydroxyles piégés dans la silice déposée sur la préforme primaire.

Le gaz plasmagène est en particulier de l'air, sauf pour l'amorçage de la torche à plasma pour lequel il est remplacé ainsi qu'il est bien connu par un courant d'argon alors seul reçu dans le fond de la torche. A cet effet, une conduite supplémentaire, non représentée, qui débouche dans le fond de la torche, peut être prévue pour l'amenée d'argon. En variante, les conduites 8 et 9 servent également à l'amenée d'argon, la conduite 12 étant alors fermée.

La recharge de la préforme primaire est tout d'abord initialisée, c'est-à-dire qu'elle est réalisée au départ à l'aide de gaz plasmagène non humidifié, pour l'obtention d'une recharge dite initiale de silice, de l'ordre de quelques millimètres d'épaisseur, ayant une faible teneur d'ions OH, inférieure à 50 p.p.m. Elle se poursuit ensuite, à niveau constant ou à niveau progressif en continu ou pas à pas de vapeur d'eau dans le gaz plasmagène. Elle permet à partir d'une préforme primaire de diamètre de 18mm l'obtention directe d'une préforme de diamètre de 40mm, voire de 60 à 70mm, à forte teneur d'ions hydroxyles dans la silice de recharge, cette teneur étant constante depuis la recharge initiale et de l'ordre de 100 p.p.m ou étant progressive et allant de 50 p.p.m à 200 ou 250 p.p.m depuis la recharge initiale. Elle peut se terminer par une recharge finale de relativement faible épaisseur et relativement faible teneur d'ions OH, inférieure à 50 p.p.m.

Une telle préforme rechargée permet l'étirage de plus grandes longueurs de fibre optique et l'obtention de fibres présentant des atténuations très satisfaisantes aux longueurs d'ondes utiles de transmission. Ces atténuations sont très inférieures à celles de fibres issues de préformes rechargées sans apport d'humidité, même lorsque la recharge effectuée selon l'invention est d'épaisseur plus importante que celle effectuée sans apport d'ions hydroxyles.

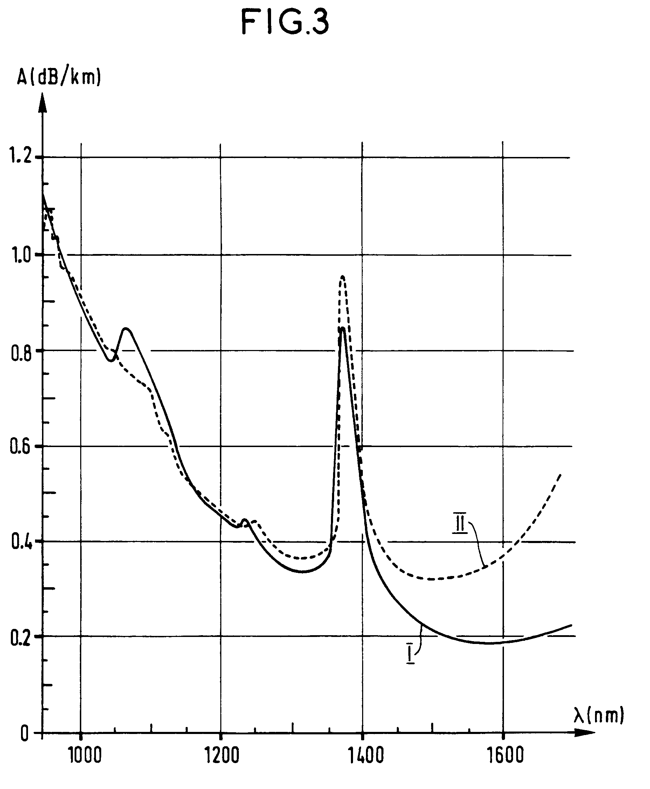

Dans la figure 3, la courbe I, en traits pleins, montre l'atténuation en dB/km en fonction de la longueur d'onde exprimée en nm d'une fibre issue d'une préforme rechargée selon l'invention et la courbe II, en pointillés, l'atténuation d'une fibre issue d'une préformée également rechargée de silice pure mais sans apport de vapeur d'eau.

La courbe I fait ressortir que l'atténuation à 1310nm est de 0,32 dB/km et à 1550nm de 0,195 dB/km, alors que sur la courbe II, elle est de 0,35 dB/km à 1310nm et de 0,316 dB/km à 1550nm. Ces mêmes courbes I et II font également ressortir qu'elles présentent l'une et l'autre un pic d'absorption à 1385nm et que ce pic n'est pratiquement pas affecté sur la courbe I.

Lors de la recharge par plasma réalisée conformément à l'invention sur une préforme primaire MCVD, il semble que la recharge initiale, bien que relativement peu importante, favorise une migration d'ions hydroxyles depuis le tube de silice de la préforme primaire vers l'extérieur, évitant au moins pour autant leur migration vers la gaine optique et le coeur. A partir de cette recharge initiale, il semble aussi que la forte teneur en ions hydroxyles dans la silice de recharge confère une plus faible viscosité et une meilleure homogénéité à la silice de recharge, réduit les contraintes différentielles dans la couche de recharge et relativement à la couche recouverte et évite des contraintes internes résultantes dans la gaine optique et le coeur.

Cette recharge de préforme primaire par plasma à partir de grains de silice et avec apport contrôlé d'ions hydroxyles est non seulement très satisfaisante en regard des atténuations spectrales des fibres obtenues mais permet de réduire dans un rapport de 3 ou 4 le coût de la recharge, relativement à la technique de manchonnage.

En variante, la recharge de la préforme primaire par plasma peut être réalisée à partir de grains de silice dopée, en particulier au fluor, et avec incorporation pareillement d'ions hydroxyles dans la silice dopée de recharge ainsi déposée.

En variante également par rapport à l'humidification du gaz plasmagène, l'incorporation d'ions hydroxyles dans la silice de recharge par plasma peut être obtenue par apport d'hydrogène dans la torche à plasma ou à partir d'hydrocarbures balayés par le gaz plasmagène ou par apport des atomes ou éléments nécessaires à la formation de ces ions juste derrière la torche dans la silice fondue projetée sur la préforme.

En outre, en variante les ions hydroxyles peuvent être introduits de manière contrôlée, préalablement à la recharge, dans les grains de silice qui sont utilisés pour cette recharge par plama.

Dans une autre variante, la silice de recharge peut également être obtenue à partir d'un composé de silicium et être alors déposée sous forme de suie sur la préforme par la torche à plasma puis consolidée sur la préforme. Dans ces conditions, l'introduction contrôlée d'ions hydroxyles dans la silice de recharge peut être réalisée soit au cours de l'opération de consolidation alors effectuée en atmosphère contenant des atomes H et O, ou au fur et à mesure du dépôt de suie en utilisant alors un gaz plasmagène convenable à cet effet.

## Revendications

1. Procédé de recharge par plasma d'une préforme pour fibre optique, consistant à déposer de la silice dite de recharge sur la préforme à recharger dite préforme primaire (P), à l'aide d'une torche à plasma (5), caractérisé en ce qu'il consiste en outre à introduire de façon contrôlée des ions hydroxyles dans ladite silice de recharge, pour l'obtention d'une teneur moyenne en ions hydroxyles comprise entre 50 et 100 ppm dans la silice de recharge déposée sur ladite préforme primaire.

2. Procédé selon la revendication 1, caractérisé en ce qu'il consiste à introduire lesdits ions hydroxyles dans ladite silice de recharge sensiblement au niveau de la flamme de la torche à plasma (5), au fur et à mesure de la recharge de ladite préforme primaire (P).

3. Procédé selon la revendication 2, caractérisé en ce qu'il consiste à utiliser un gaz plasmagène contenant des éléments nécessaires à l'introduction en quantité contrôlée desdits ions hydroxyles dans ladite silice de recharge.

4. Procédé selon la revendication 3, caractérisé en ce que ledit gaz plasmagène utilisé est humidifié en amont de ladite torche à plasme (5).

5. Procédé selon la revendication 2, caractérisé en ce que lesdits ions hydroxyles sont introduits dans la silice de recharge, juste en aval de ladite torche à plasma (5).

6. Procédé selon l'une des revendications 2 à 5, caractérisé en ce qu'il consiste à utiliser des grains de silice en tant que silice de recharge.

7. Procédé selon l'une des revendications 2 à 5, caractérisé en ce qu'il consiste à utiliser un composé de silicium sensiblement sans ions hydroxyles en tant que matière première pour l'obtention de ladite silice de recharge déposée sur la préforme primaire (P).

8. Procédé selon la revendication 6, caractérisé en ce qu'il consiste à introduire lesdits ions hydroxyles dans ladite silice de recharge par apport préalable et contrôlé desdits ions hydroxyles dans les grains de silice utilisés pour ladite recharge.

9. Procédé selon la revendication 6, caractérisé en ce qu'il consiste à introduire lesdits ions hydroxyles dans ladite silice de recharge d'une part avant la recharge, par apport partiel desdits ions hydroxyles dans lesdits grains de silice utilisés pour la recharge et d'autre part par apport complémentaire au cours de ladite recharge.

10. Procédé selon la revendication 1, caractérisé en ce qu'il consiste à introduire lesdits ions hydroxyles dans la silice de recharge, déposée sous forme de suie sur ladite préforme primaire (P) puis consolidée sur cette dernière, au cours de la consolidation alors effectuée en atmosphère comportant des atomes hydrogène et oxygène.

11. Procédé selon l'une des revendications 1 à 10, caractérisé en ce que lesdits ions hydroxyles sont en quantité sensiblement constante dans ladite silice de recharge.

12. Procédé selon l'une des revendications 1 à 10, caractérisé en ce que lesdits ions hydroxyles sont en quantité variable dans l'épaisseur de la silice de recharge.

13. Fibre optique issue d'une préforme primaire (P) rechargée de silice par le procédé selon l'une des revendications 1 à 10, comportant un coeur optique (1), une gaine optique (2) et au moins un revêtement de silice dont le plus externe, dit revêtement externe (3,4), résulte de la recharge de ladite préforme primaire, caractérisée en ce que ledit revêtement externe de silice a une teneur moyenne d'ions hydroxyles comprise entre 50 et 150 p.p.m.

14. Fibre optique selon la revendication 13, caractérisée en ce que ledit revêtement externe de silice (3,4) a une teneur d'ions hydroxyles variable progressivement et comporte une première couche (3) la plus intérieure ayant une teneur en ions hydroxyles inférieure à 50 p.p.m et une deuxième couche (4) recouvrant la première couche et d'épaisseur supérieure à celle de ladite première couche et ayant une teneur en ions hydroxyles comprise entre 50 et 250 p.p.m.

15. Fibre optique selon la revendicaiton 14, caractérisée en ce que ledit revêtement externe de silice (3,4) comporte une troisième couche, la plus extérieure, ayant une teneur en ions hydroxyles inférieure à 50 p.p.m.

## Claims

1. A method of building up an optical fiber preform by using plasma deposition, the method consisting in depositing build-up silica on the primary preform (P) to be built up by means of a plasma torch (5), the method being characterized in that it further consists in injecting hydroxyl ions in controlled manner into said build-up silica so as to obtain an average hydroxyl ion concentration lying in the range 50 ppm to 100 ppm in the build-up silica deposited on said primary preform.

2. A method according to claim 1, characterized in that it consists in injecting said hydroxyl ions into said build-up silica substantially at the flame of the plasma torch (5) as said primary preform (P) is being built up.

3. A method according to claim 3, characterized in that it consists in using a plasma-generating gas containing the elements required for injecting a controlled quantity of said hydroxyl ions into said build-up silica.

4. A method according to claim 3, characterized in that the plasma-generating gas used is humidified upstream from said plasma torch (5).

5. A method according to claim 2, characterized in that said hydroxyl ions are injected into the build-up silica immediately downstream from said plasma torch (5).

6. A method according to any one of claims 2 to 5, characterized in that it consists in using silica grains for constituting the build-up silica.

7. A method according to any one of claims 2 to 5, characterized in that it consists in using a silica compound having substantially no hydroxyl ions as the raw material for obtaining said build-up silica that is deposited on the primary preform (P).

8. A method according to claim 6, characterized in that it consists in injecting said hydroxyl ions into said build-up silica by prior and controlled delivery of said hydroxyl ions into the silica grains used for said build-up silica.

9. A method according to claim 6, characterized in that it consists in injecting said hydroxyl ions into said build-up silica firstly prior to building up by feeding a fraction of said hydroxyl ions to said silica grains used for the build-up silica, and secondly by adding further ions while building up is taking place.

10. A method according to claim 1, characterized in that it consists in injecting said hydroxyl ions into the build-up silica which is deposited in the form of soot on said primary preform (P) and then consolidated thereon, injection taking place during consolidation which is then performed in an atmosphere that includes atoms of hydrogen and of oxygen.

11. A method according to any one of claims 1 to 10, characterized in that said hydroxyl ions are in a substantially constant quantity in said build-up silica.

12. A method according to any one of claims 1 to 10, characterized in that said hydroxyl ions are in a quantity that varies through the thickness of the build-up silica.

13. An optical fiber made from a primary preform (P) built up with silica by the method according to any one of claims 1 to 10, the fiber comprising an optical core (1), optical cladding (2), and at least one silica covering, with the outer silica covering (3, 4) being the result of said primary preform being built up, the fiber being characterized in that said outer silica covering has an average hydroxyl ion concentration lying in the range 50 ppm to 150 ppm.

14. An optical fiber according to claim 13, characterized in that said outer silica covering (3, 4) has a hydroxyl ion concentration that varies progressively, the covering comprising an innermost first layer (3) having a hydroxyl ion concentration that is less than 50 ppm, and a second layer (4) covering said first layer having a thickness that is greater than the thickness of said first layer, and having a hydroxyl ion concentration lying in the range 50 ppm to 250 ppm.

15. An optical fiber according to claim 14, characterized in that said outer silica covering (3, 4) includes a third, outermost layer having a hydroxyl ion concentration of less than 50 ppm.

## Patentansprüche

1. Plasma-Auftragsverfahren für eine Vorform für optische Fasern, das darin besteht, Siliciumdioxid, Auftrags-Siliciumdioxid genannt, mit Hilfe eines Plasmabrenners (5) auf der zu beschichtenden Vorform, primäre Vorform (P) genannt, abzuscheiden, dadurch gekennzeichnet, daß es außerdem darin besteht, in das Auftrags-Siliciumdioxid in kontrollierter Weise Hydroxylionen einzuführen, um einen mittleren Gehalt an Hydroxylionen in dem auf der primären Vorform abgeschiedenen Auftrags-Siliciumdioxid zwischen 50 und 100 ppm zu erhalten.

2. Verfahren nach Anspruch 1, dadurch gekennzeichnet, daß es darin besteht, die Hydroxylionen im wesentlichen in Höhe der Flamme des Plasmabrenners (5) entsprechend dem Auftrag für die primäre Vorform (P) in das Auftrags-Siliciumdioxid einzuführen.

3. Verfahren nach Anspruch 2, dadurch gekennzeichnet, daß es darin besteht, ein plasmabildendes Gas zu verwenden, das Elemente enthält, die für die Einführung der Hydroxylionen in das Auftrags-Siliciumdioxid in kontrollierter Menge notwendig sind.

4. Verfahren nach Anspruch 3, dadurch gekennzeichnet, daß das verwendete plasmabildende Gas stromaufwärts des Plasmabrenners (5) befeuchtet wird.

5. Verfahren nach Anspruch 2, dadurch gekennzeichnet, daß die Hydroxylionen gerade stromabwärts des Plasmabrenners (5) in das Auftrags-Siliciumdioxid eingeführt werden.

6. Verfahren nach einem der Ansprüche 2 bis 5, dadurch gekennzeichnet, daß es darin besteht, als Auftrags-Siliciumdioxid Siliciumdioxidkörner zu verwenden.

7. Verfahren nach einem der Ansprüche 2 bis 5, dadurch gekennzeichnet, daß es darin besteht, als erstes Material zum Erhalten des auf der primären Vorform (P) abgeschiedenen Auftrags-Siliciumdioxids eine Siliciumverbindung im wesentlichen ohne Hydroxylionen zu verwenden.

8. Verfahren nach Anspruch 6, dadurch gekennzeichnet, daß es darin besteht, die Hydroxylionen durch vorhergehenden und kontrollierten Zusatz der Hydroxylionen zu den für den Auftrag verwendeten Siliciumdioxidkörnern in das Auftrags-Siliciumdioxid einzuführen.

9. Verfahren nach Anspruch 6, dadurch gekennzeichnet, daß es darin besteht, die Hydroxylionen einerseits vor dem Auftrag durch teilweisen Zusatz der Hydroxylionen zu den für den Auftrag verwendeten Siliciumdioxidkörnern und andererseits durch ergänzenden Zusatz während des Auftrags in das Auftrags-Silicumdioxid einzuführen.

10. Verfahren nach Anspruch 1, dadurch gekennzeichnet, daß es darin besteht, die Hydroxylionen in das in Form von Ruß auf der primären Vorform (P) abgeschiedene, dann auf dieser letzteren verfestigte Auftrags-Siliciumdioxid während der dann in einer Atmosphäre, die Wasserstoff- und Sauerstoffatome aufweist, ausgeführten Verfestigung einzuführen.

11. Verfahren nach einem der Ansprüche 1 bis 10, dadurch gekennzeichnet, daß die Hydroxylionen im Auftrags-Siliciumdioxid in im wesentlichen konstanter Menge vorliegen.

12. Verfahren nach einem der Ansprüche 1 bis 10, dadurch gekennzeichnet, daß die Hydroxylionen in einer in der Dicke des Auftrags-Siliciumdioxids veränderlichen Menge vorliegen.

13. Optische Faser, die von einer primären Vorform (P) stammt, auf die durch das Verfahren nach einem der Ansprüche 1 bis 10 Siliciumdioxid aufgetragen wurde, die einen optischen Kern (1), einen optischen Mantel (2) und wenigstens eine Siliciumdioxidbeschichtung aufweist, deren Äußerstes, äußere Beschichtung (3, 4) genannt, aus dem Auftrag auf die primären Vorform resultiert, dadurch gekennzeichnet, daß die äußere Siliciumdioxidbeschichtung einen mittleren Hydroxylionengehalt zwischen 50 und 150 ppm aufweist.

14. Optische Faser nach Anspruch 13, dadurch gekennzeichnet, daß die äußere Siliciumdioxidbeschichtung (3, 4) einen stufenlos veränderlichen Hydroxylionengehalt hat und eine erste Schicht (3), die innerste, mit einem Gehalt an Hydroxylionen von weniger als 50 ppm und eine zweite Schicht (4) aufweist, die die erste Schicht bedeckt und eine größere Dicke als die der ersten Schicht hat und einen Gehalt an Hydroxylionen zwischen 50 und 250 ppm aufweist.

15. Optische Faser nach Anspruch 14, dadurch gekennzeichnet, daß die äußere Siliciumdioxidbeschichtung (3, 4) eine dritte Schicht, die äußerste, mit einem Gehalt an Hydroxylionen von weniger als 50 ppm aufweist.
